# EUROPÄISCHE PATENTSCHRIFT

(11) **EP 2 794 298 B1**
(45) Veröffentlichungstag und Bekanntmachung des Hinweises auf die Patenterteilung: **19.06.2019**
(21) Anmeldenummer: 12799144.6
(22) Anmeldetag: 06.12.2012
(51) Int. Cl.: B60C 11/03, B60C 11/01

(54) **LAUFSTREIFENPROFIL EINES FAHRZEUGLIFTREIFENS**
TREAD PROFILE OF PNEIMATIC TIRE
BAND DE ROULEMENT D´UN PNEU

(30) Priorität: 19.12.2011 DE 102011056576
(43) Veröffentlichungstag der Anmeldung: 29.10.2014
(73) Patentinhaber: Continental Reifen Deutschland GmbH, 30165 Hannover (DE)
(72) Erfinder: BEHR, Ulrich, 30169 Hannover (DE)
(74) Vertreter: Finger, Karsten
(86) Internationale Anmeldenummer: PCT/EP2012/074593
(87) Internationale Veröffentlichungsnummer: WO 2013/092226

(56) Entgegenhaltungen:
- EP-A1- 2 374 636
- FR-A- 428 053
- NL-A- 6 917 712
- US-A- 4 945 966

## Beschreibung

Die Erfindung betrifft ein Laufstreifenprofil eines Fahrzeugluftreifens mit durch Rillen voneinander getrennten radial erhabenen Profilelementen, wie zum Beispiel Profilblockelementen oder Profilrippen, mit einer Umfangsrippe, welche in radialer Richtung R des Reifens nach außen hin von einer radial äußeren Oberfläche begrenzt ist.

Derartige Laufstreifenprofile sind bekannt. Es ist bekannt, in den Laufstreifenprofilen Profilblockreihen auszubilden, welche sich über den gesamten Umfang des Fahrzeugluftreifens erstrecken und in axialer Richtung A des Reifens durch in Umfangsrichtung U ausgerichtete und über den Umfang erstreckte Umfangsrillen begrenzt sind, wobei die Profilblockreihen aus in Umfangsrichtung hintereinander angeordneten und jeweils durch Querrillen voneinander getrennten Profilblockelementen ausgebildet sind. Die Querrillen erstrecken sich dabei durch die gesamte Profilblockreihe hinweg und ermöglichen sowohl in Querrichtung verlaufende Griffkanten zur Erzielung eines verbesserten Griffs für Traktion bzw. Bremsen auf nasser Straßenoberfläche, sowie eine hohe Aufnahmekapazität zur Aufnahme von Wasser beim Abrollen auf nasser Straßenoberfläche und somit zur Verbesserung der Aquaplaning-Eigenschaften. Die durch die Profilblockreihen hindurch erstreckten Querrillen reduzieren jedoch die Umfangs- und die Quersteifigkeit der Profilblockreihe durch die hierdurch bedingte hohe Flexibilität der einzelnen Profilblockelemente. Dies beeinträchtigt die Handling-Eigenschaften und die Brems- und Traktionseigenschaften auf trockener Straßenoberfläche. Gerade in den für gute Handlingeigenschaften besonders wichtigen Schulterprofilblockreihen können hierdurch die Handling-Eigenschaften des Reifens besonders beeinträchtigt werden. Darüber hinaus werden beim Durchlaufen des Reifenlatsches beim Aufschlagen der durch die Querrillen erzeugten Profilblockkanten sowie beim Auslaufen der einzelnen Kanten aus dem Reifenlatsch jeweils impulsartig Schwingungen angeregt, die störende Geräuschbildungen begünstigen. Die Querrillen münden bei derartigen, bekannten Reifen in die Profilblockreihen begrenzende Umfangsrillen. Im Einmündungsbereich von Querrille in die jeweilige Umfangsrille werden scharfkantige Profilblockecken erzeugt, welche besonders zum Schwingen und somit zur Geräuschbildung neigen und besonders abriebempfindlich sind. Im Rillengrund ist darüber hinaus im Bereich der Ecken die Möglichkeit der Rissbildung zu beachten.

Zur Reduktion der Geräuschentstehung ist es bekannt, die Querrillen schräg verlaufend als Schrägrillen auszubilden, so dass kein punktueller Aufschlag beim Einlauf in den Reifenlatsch erfolgt. Hierdurch kann die Geräuschbildung zwar etwas reduziert werden, allerdings werden durch Umfangsrillen und Schrägrillen im jeweiligen Profilblockelement hierdurch Profilblockecken mit zum Teil spitzem Winkel ausgebildet, welche ihrerseits besonders flexibel und besonders abriebsanfällig sind und verstärkt zum Schwingen und zur Geräuschbildung neigen. Die Abriebsanfälligkeit der Profilblockecken kann zu unregelmäßigem Abrieb führen. Darüber hinaus ist bei derartigen Ausbildungen die Möglichkeit der Rissbildung im Rillengrund besonders zu beachten. Bei derartigen Blockausbildungen mit Quer- oder Schrägrillen können erhöhter Abrieb oder dort auch mögliche Abbrüche im Bereich der Blockkanten darüber hinaus die Haltbarkeit, die Geräuschbildung sowie die Kraftübertragung weiterhin negativ beeinflussen. Schrägrillen beeinflussen die Kraftübertragung - z.B. die Traktionskraft zur Beschleunigung bei Vorwärtsfahrt oder die Bremskraft bei Vorwärtsfahrt - in die beiden Umfangsrichtungen darüber hinaus unterschiedlich. Darüber hinaus wird auch die Quersteifigkeit der Profilblockelemente negativ beeinflusst, wodurch auch die Handlingeigenschaften negativ beeinflusst werden können.

Es ist bekannt, im Bereich der Reifenschulter neben eine Profilblockreihe durch eine schmale Umfangsrille von ihr getrennt eine Umfangsrippe auszubilden, welche die Profilblöcke der Profilblockreihe zur Verbesserung der übertragbaren Querkräfte etwas stabilisiert. Auch bei diesen Ausbildungen schlagen die in der Profilblockreihe ausgebildeten Querrillen mit den zwischen Querrillen und Profilblockelementen ausgebildeten Kanten beim Einlauf in den Reifenlatsch impulsartig auf und geraten sowohl beim Aufschlag als auch beim Auslauf impulsartig angeregt ins Schwingen, so dass die Querrillen weiterhin zur erhöhten Geräuschbildung beitragen. Darüber hinaus ist die Profilblockreihe lediglich durch die zur Reifeninnenseite benachbarte Umfangsrille in einer Richtung stabilisiert, zur Reifenaußenschulter hin ist sie jedoch weiterhin nicht zusätzlich stabilisiert, so dass auch die Querkraftübertragung weiterhin noch beeinträchtigt ist. Die durch die Querrillen erzeugte Flexibilität der Profilblockelemente beeinträchtigt weiterhin negativ die Brems- und Traktionseigenschaften durch die hierdurch reduzierte Umfangssteifigkeit der Profilblockelemente. Gerade in Extrem-Handling-Situationen ist die immer noch verbleibende Flexibilität der Profilblockelemente auch noch mit einer noch unerwünscht reduzierten Quersteifigkeit für Querkraftübertragung. Die verbleibende Flexibilität erfordert darüber hinaus, weiterhin die Rissbildungsmöglichkeiten im Rillengrund zu beachten.

Unabhängig davon ist auch bekannt, im Laufstreifenprofil eines Fahrzeugluftreifens über den gesamten Umfang erstreckte Umfangsrippen auszubilden. Die durchgehenden Umfangsrippen ermöglichen eine hohe Steifigkeit in Umfangsrichtung und damit eine hohe Kraftübertragung zur Übertragung von Brems- und Traktionskräften, gerade auf trockener Straße. Den Rippen fehlt jedoch das Aufnahmepotential zur Aufnahme von Wasser, wodurch die Eignung auf nasser Straße und insbesondere die Aquaplaning-Neigung beeinträchtigt wird.

**Aus der** US 4, 945, 966 **ist ein Laufstreifenprofil eines Fahrzeugluftreifens gemäß dem Oberbegriff von Anspruch 1 bekannt.**

**Aus der** EP 2 374 636 A1 **ist ein Laufstreifenprofil eines Motorradreifens mit Stollenprofil bekannt, bei dem in den erhabenen Blockelementen Rillen ausgebildet sind, die um einen Stollenabschnitt eine geschlossene Ringform bilden.**

Der Erfindung liegt die Aufgabe zugrunde, mit einfachen Mitteln ein Laufstreifenprofil eines Fahrzeugluftreifens zu schaffen, bei dem gute Handling- und Geräuscheigenschaften bei guten Traktions- und Bremseigenschaften in beiden Drehrichtungen ermöglicht werden.

Die Aufgabe wird erfindungsgemäß durch die Ausbildung eines Laufstreifenprofils eines Fahrzeugluftreifens mit durch Rillen voneinander getrennten radial erhabenen Profilelementen, wie zum Beispiel Profilblockelementen oder Profilrippen, mit einer Umfangsrippe, welche in radialer Richtung R des Reifens nach außen hin von einer radial äußeren Oberfläche begrenzt ist, gemäß den Merkmalen von Anspruch 1 gelöst, bei dem in der radial äußeren Oberfläche der Umfangsrippe über den Umfang des Fahrzeugluftreifens verteilt, in Umfangsrichtung U zueinander beabstandet und in axialer Richtung A von der nächstliegenden Rippenflanke der Umfangsrippe beabstandet Rillen ausgebildet sind, welche um einen Rippenabschnitt eine geschlossene Ringform bilden, **und bei dem der zur nächstliegenden die Umfangsrippe begrenzenden Umfangsrille benachbarte Längserstreckungsabschnitt längs seiner Erstreckung mit einer konstanten Rillentiefe T₂ ausgebildet ist, wobei die Quererstreckungsabschnitte über wenigstens dreiviertel ihrer Erstreckungslänge mit einer Rillentiefe T₁ mit T₁ > T₂ ausgebildet sind, welche sich längs dieser Erstreckungslänge in Erstreckungsrichtung zu dem zur nächstliegenden die Umfangsrippe begrenzenden Umfangsrille hin benachbarten Längserstreckungsabschnitt in axialer Richtung A des Reifens stetig vergrößert.**

Die Ausbildung ermöglicht eine hohe Umfangssteifigkeit und eine hohe Quersteifigkeit durch die Nutzung der Ausbildung einer Umfangsrippe. Hierdurch wird eine hohe Kraftübertragung für Bremsen und für Beschleunigen auf trockener Straße sowie eine hohe Querkraftübertragung ermöglicht, wodurch Handling-Eigenschaften positiv beeinflusst werden. Die Ausbildung der Umfangsrippe mit den über den Umfang verteilt ausgebildeten Rillen, welche jeweils eine um einen Rippenabschnitt geschlossene Ringform bilden, ermöglicht ein großes Aufnahmevolumen innerhalb der Rippe zur Aufnahme von Wasser sowie die Schaffung von Kanten zur Querkraft- und zur Längskraftübertragung auf nasser Straße, wodurch Traktions- und Bremseigenschaften auf nasser Straße, Handlingeigenschaften auf nasser Straße sowie die Aquaplaning-Eigenschaften auf einem hohen Niveau ermöglicht werden. Die Ausbildung der Umfangsrippe mit in Umfangsrichtung voneinander beabstandeten, eine geschlossene Ringform bildenden Rillen sowie mit einer Beabstandung dieser Rillen von den nächstliegenden Rippenflanken der Umfangsrippe bewirkt dabei die Beibehaltung der hohen Umfangs- und Quersteifigkeiten der Umfangsrippe. Durch die ringförmig umschließende Ausbildung des Rippenabschnitt durch die Rille innerhalb der Umfangsrippe und die Beabstandung der Rillen in der Umfangsrippe in Umfangsrichtung voneinander sowie von den Rippenflanken, können darüber hinaus trotz Rillen bewegliche, flexible Kanten und Ecken weitgehend verhindert werden, wodurch die Möglichkeit der Rissbildung und Profilelementausbrüche reduziert werden kann, was weiterhin zu einer sicheren Aufrechterhaltung der hohen Handling-, Traktions- und Bremseigenschaften sowie zur Vermeidung der erhöhten Geräuschbildung beiträgt. Die Ausbildung der Rillen mit geschlossener Ringform bewirkt darüber hinaus ein vergleichmäßigteres Auftreffen von Rillenwänden auf die Straßenoberfläche aus Austritt aus dem Reifenlatsch, wodurch das erzeugte Geräuschbild verbessert wird. **Durch den Tiefenverlauf kann in einfacher Weise ein Aufnahmevolumen zur Aufnahme von Wasser optimiert und hierdurch die Aquaplaningeigenschaften in Querrichtung weiter verbessert werden.**

Besonders vorteilhaft ist die Ausbildung eines Fahrzeugluftreifens gemäß den Merkmalen von Anspruch 2, wobei die Rille mit zwei in Umfangsrichtung U hintereinander angeordneten im wesentlichen quer zur Rippenerstreckungsrichtung verlaufenden Quererstreckungsabschnitten, von denen der eine in Umfangsrichtung dem umschlossenen Rippenabschnitt vorgeordnet und der andere dem umschlossenen Rippenabschnitt nachgeordnet angeordnet ist und die den Rippenabschnitt in Umfangsrichtung begrenzen, und mit zwei in axialer Richtung A voneinander beabstandeten, im wesentlichen in Umfangsrichtung verlaufenden und die Quererstreckungsabschnitte miteinander verbindenden Längserstreckungsabschnitten, von denen der eine in axialer Richtung A zur einen Seite vom Rippenabschnitt und der andere in axialer Richtung A zur anderen Seite vom Rippenabschnitt angeordnet ist und die den Rippenabschnitt in axialer Richtung A begrenzen. Die Ausbildung ermöglicht in einfacher Weise die Nutzung der Vorteile der Umfangsrippe der hohen Umfangs- und Quersteifigkeit und gleichzeitig auch von Profilblockreihen mit Querrillen mit ihren Quergriffkanten ohne die Nachteile der erhöhten Geräuschbildung unter zusätzlicher Nutzung von durch die Umfangsabschnitte erzielten Umfangsgerichteten Kanten für ein verbessertes Nasshandling. Die derart umschlossene Ausbildung ermöglicht es in einfacher Weise spitzwinklige flexible Profilelementkanten zu vermeiden, wodurch die Geräuschbildung und Abriebseffekte auf geringem Niveau gehalten werden können.

Besonders vorteilhaft ist die Ausbildung eines Fahrzeugluftreifens gemäß den Merkmalen von Anspruch 3, wobei die Rille von einer inneren, zum umschlossenen Rippenabschnitt hinweisenden Rillenwand und von einer äußeren, vom umschlossenen Rippenabschnitt wegweisenden Rillenwand begrenzt ist, welche sich in radialer Richtung R ausgehend vom Rillengrund bis zur radial äußeren Oberfläche erstrecken, wobei die äußere Rillenwand in den beiden Quererstreckungsabschnitten längs ihrer Erstreckung in axialer Richtung A zum umschlossenen Rippenabschnitt hin gekrümmt ausgebildet sind. Hierdurch kann zusätzlich in einfacher Weise sichergestellt werden, dass die jeweils im Reifenlatsch einlaufenden Kanten nicht schlagartig auftreffen oder im Auslauf schlagartig frei werden. Hierdurch kann die Geräuschbildung minimiert werden. Die Krümmung bewirkt darüber hinaus eine höhere Formstabilität der zwischen Rillenwänden und radial äußerer Oberfläche gebildeten Kanten.

Besonders vorteilhaft ist die Ausbildung eines Fahrzeugluftreifens gemäß den Merkmalen von Anspruch 4, wobei äußere Rillenwand in den beiden Quererstreckungsabschnitten längs ihrer Erstreckung in axialer Richtung A mit einem zum umschlossenen Rippenabschnitt hin kreissegmentförmig gekrümmten Verlauf mit Krümmungsradius R_{K} ausgebildet sind, wobei insbesondere der Krümmungsradius R_{K} größer ausgebildet ist als der maximale in Umfangsrichtung U gemessene Abstand der äußeren Rillenwand der beiden Quererstreckungsabschnitte von einander. Hierdurch kann in einfacher Weise sichergestellt werden, dass die jeweils im Reifenlatsch einlaufenden Kanten nicht schlagartig auftreffen oder im Auslauf schlagartig frei werden. Hierdurch kann die Geräuschbildung minimiert werden. Die kreissegmentförmige Krümmung bewirkt darüber hinaus eine besonders hohe Formstabilität der zwischen Rillenwänden und radial äußerer Oberfläche gebildeten Kanten. Die kreissegmentförmige Krümmung ermöglicht außerdem eine Ausbildung der Rille mit einem großem Quererstreckungsvolumen der Rille zur Aufnahme von Wasser und mit einem hohen Quererstreckungsanteil der zwischen Rillenwand und radial äußerer Oberfläche gebildeten Kanten umgesetzt werden, wodurch Aquaplaningeigenschaften in Querrichtung und Nassgriff weiter verbessert werden können.

Besonders vorteilhaft ist die Ausbildung eines Fahrzeugluftreifens gemäß den Merkmalen von Anspruch 5, wobei die Rille im Wesentlichen spiegelsymmetrisch ausgebildet ist mit einer zwischen den beiden Quererstreckungsabschnitten ausgebildeten Symmetrieachse. Hierdurch kann unabhängig von der Drehrichtung ein im Wesentlichen gleiches Verhalten gesichert werden, wodurch ein Einsatz auch bei asymmetrischen Profilen unter Nutzung aller Vorteile uneingeschränkt möglich ist.

Besonders vorteilhaft ist die Ausbildung eines Fahrzeugluftreifens gemäß den Merkmalen von Anspruch 6, wobei die Symmetrieachse unter einem Winkel α mit 0°≤α≤5° zur axialen Richtung A des Fahrzeugluftreifens ausgerichtet ist. Hierdurch kann in einfacher Weise eine gute Geräuschoptimierung erzielt werden ohne besondere Nachteile in der Kraftübertragung.

Besonders vorteilhaft ist die Ausbildung eines Fahrzeugluftreifens gemäß den Merkmalen von Anspruch 7, wobei im Rippenabschnitt zwischen den beiden Quererstreckungsabschnitten mit Abstand zu den Quererstreckungsabschnitten und zu den Längserstreckungsabschnitten ein Feineinschnitt ausgebildet ist, welcher mit seiner Haupterstreckungsrichtungskomponente insbesondere in axialer Richtung A ausgerichtet ist. Hierdurch werden zusätzliche Querkanten erzeugt, wodurch die Naßbremseigenschaften weiter verbessert werden können. Darüber hinaus kann eine Art Harmonisierung der in der Rippe ausgebildeten Rippenabschnittsgrößen ermöglicht werden und dadurch die Entstehung von unregelmäßigem Abrieb weiter verringert werden.

Besonders vorteilhaft ist die Ausbildung eines Fahrzeugluftreifens gemäß den Merkmalen von Anspruch 8, wobei die Quererstreckungsabschnitte jeweils mit einer Rillenbreite ausgebildet sind, welche ausgehend vom einen Längserstreckungsabschnitt bis zum anderen Längserstreckungsabschnitt in einem ersten Erstreckungsabschnitt zunimmt und in einem anschließenden zweiten Erstreckungsabschnitt, welcher bis zum anderen Längserstreckungsabschnitt reicht, abnimmt.

Besonders vorteilhaft ist die Ausbildung eines Fahrzeugluftreifens gemäß den Merkmalen von Anspruch **9,** wobei die Rillenwände in den Quererstreckungsabschnitten in ihrem radial äußeren Erstreckungsabschnitt im Übergang zu der radial äußeren Oberflächen zumindest teilweise angefast ausgebildet sind. Hierdurch werden die Rillenkanten stabilisiert, wodurch die Trockenbremseigenschaften weiter verbessert werden können.

Besonders vorteilhaft ist die Ausbildung eines Fahrzeugluftreifens gemäß den Merkmalen von Anspruch **10,** wobei die Umfangsrippe eine Schulterrippe ist. Hierdurch kann die Schulter besonders stabilisiert werden, wodurch die Handlingeigenschaften weiter begünstigt werden. Besonders die Ausbildung der Umfangsrippe als Schulterrippe einer für den Einsatz am Fahrzeug als Außenschulter ausgebildeten Schulter, welche die für Handlingeigenschaften besonders wesentliche Schulter ist, können hierdurch die Handlingeigenschaften besonders positiv beeinflusst werden.

Besonders vorteilhaft ist die Ausbildung eines Fahrzeugluftreifens gemäß den Merkmalen von Anspruch **11,** wobei die Rille sich mit ihren Quererstreckungsabschnitten von einer axialen Position innerhalb der Bodenaufstandsbreite bis in eine axiale Position außerhalb der Bodenaufstandsbreite erstreckt. Hierdurch kann das Wasser in den Querrillen einfach und sicher aus dem Bereich der Bodenaufstandsfläche (Footprint) abgeleitet werden.

Die Erfindung wird im Folgenden an Hand der in den Figuren 1 bis 9 dargestellten Ausführungsbeispiele näher erläutert. Hierin zeigen
- Fig. 1: eine Draufsicht auf ein Laufstreifenprofil mit erfindungsgemäß ausgebildeter Schulterrippe,
- Fig. 2: eine Querschnittsdarstellung des Laufstreifenprofils von Fig.1 gemäß Schnitt II-II von Fig.1
- Fig. 3: einen Ausschnitt des Laufstreifenprofils von Fig.1 in vergrößerter Darstellung,
- Fig. 4: eine Querschnittsdarstellung des Laufstreifenprofils von Fig.1 gemäß Schnitt IV-IV von Fig.1 bzw. von Fig.3,
- Fig. 5: eine Querschnittsdarstellung des Laufstreifenprofils von Fig.1 in Schnittdarstellung gemäß Schnitt V-V von Fig.1 bzw. von Fig.3,
- Fig. 6: eine Querschnittsdarstellung des Laufstreifenprofils von Fig.1 in Schnittdarstellung gemäß Schnitt VI-VI von Fig.1 bzw. von Fig.3,
- Fig. 7: eine Querschnittsdarstellung des Laufstreifenprofils von Fig.1 gemäß Schnitt VII-VII von Fig.1 bzw. von Fig.3,
- Fig. 8: einen vergrößerter Laufstreifenabschnitt von Fig.1 analog zur Darstellung von Fig.3 in alternativer Ausführung der ringförmigen geschlossenen Rille und
- Fig. 9: eine Querschnittsdarstellung des Laufstreifenprofils gemäß Schnitt IX-IX von Fig.8.

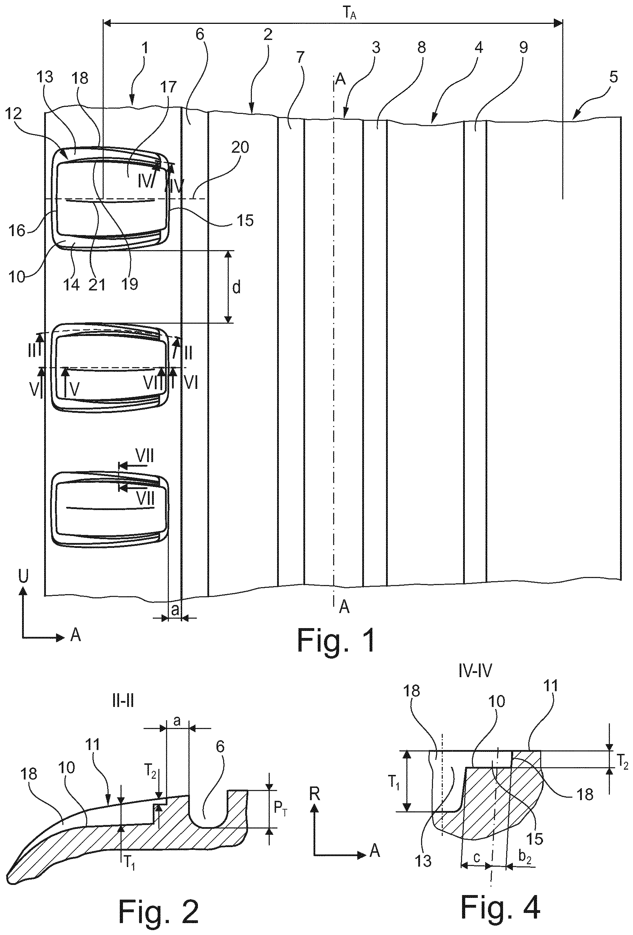

Die Figuren 1 bis 7 zeigen das Laufstreifenprofil eines Fahrzeugluftreifens für Personenkraftwagen (Pkw) mit einer Schulterrippe 1, sowie mit Profilbändern 2, 3 und 4 und mit einem Schulterprofilband 5 bekannter Art. **Die Schulterrippe 1 ist eine Umfangsrippe.** Die Umfangsrippe 1, die Profilbände 2, 3 und 4 und das Schulterprofilband 5 sind jeweils in Umfangsrichtung U des Fahrzeugluftreifens ausgerichtet und über den Umfang des Fahrzeugluftreifens erstreckt ausgebildet. Die Schulterrippe 1 und das Profilband 2 sind in axialer Richtung A nebeneinander angeordnet und durch eine über den gesamten Umfang des Fahrzeugluftreifens erstreckte und in Umfangsrichtung U ausgerichtete Umfangsrille 6 axial voneinander beabstandet. Das Profilband 2 und das Profilband 3 sind in axialer Richtung A nebeneinander angeordnet und durch eine über den Umfang des Fahrzeugluftreifens erstreckte und in Umfangsrichtung U ausgerichtete Umfangsrille 7 axial voneinander beabstandet. Das Profilband 3 und das Profilband 4 sind in axialer Richtung A nebeneinander angeordnet und durch eine in Umfangsrichtung U des Fahrzeugluftreifens ausgerichtete und über den Umfang des Fahrzeugluftreifens erstreckte Umfangsrille 8 axial voneinander beabstandet. Das Profilband 4 und das Schulterprofilband 5 sind in axialer Richtung A des Fahrzeugluftreifens nebeneinander angeordnet und durch eine in Umfangsrichtung U ausgerichtete und über den Umfang des Fahrzeugluftreifens erstreckte Umfangsrille 9 axial voneinander beabstandet. Die Bodenaufstandsbreite T_{A} des Fahrzeugluftreifens erstreckt sich aus dem axialen Erstreckungsbereich der Umfangrippe 1 bis in den axialen Erstreckungsbereich des Schulterprofilbands 5.

Die Umfangsrillen 6, 7, 8 und 9 sind jeweils in radialer Richtung R des Reifens nach innen hin durch einen über den gesamten Umfang des Fahrzeugluftreifens erstreckten Rillengrund begrenzt. Die Umfangsrippe 1, die Umfangsprofilbänder 2, 3 und 4 sowie das Schulterprofilband 5 sind in radialer Richtung R nach außen hin jeweils durch eine radial äußere Oberfläche 11 begrenzt. Die Umfangsrille 6 ist in ihrer in axialer Richtung A zur Umfangsrippe 1 hinweisenden Richtung von einer Rippenflanke begrenzt, welche die zur Umfangsrille 6 hinweisende Rillenwand bildendet und sich ausgehend vom Rillengrund der Rille 6 in radialer Richtung R nach außen bis zu der radial äußeren Oberfläche 11 der Umfangsrippe 1 erstreckt. Die Umfangsrille 6 ist zu dem Profilband 2 hin durch eine die zur Umfangsrille 6 hin weisende Rillenwand bildende Profilbandflanke begrenzt, welche sich in radialer Richtung R ausgehend vom Rillengrund der Rille 6 nach außen bis zu der radial äußeren Oberfläche 11 des Profilbandes 2 erstreckt. In analoger Weise sind die Umfangsrillen 7, 8 und 9 in ihren beiden axialen Richtungen jeweils durch eine zum angrenzenden Profilband hinweisende, eine Rillenwand bildende Profilbandflanke begrenzt, welche sich jeweils aus dem Rillengrund der jeweiligen Umfangsrillen 7, 8 bzw. 9 in radialer Richtung R nach außen bis zu der radial äußeren Oberfläche 11 des jeweils angrenzenden Profilbandes erstreckt.

Die Umfangsrillen 6, 7, 8 und 9 sind mit einer in radialer Richtung R gemessenen Profiltiefe P_{T} ausgebildet, welche das radiale Maß zwischen dem jeweiligen Rillengrund der zugehörigen Umfangsrille 6, 7, 8 bzw. 9 und der durch die radial äußeren Oberflächen 11 der angrenzenden Profilbänder bzw. Umfangsrippen gebildeten Mantelfläche des Reifens angibt.

In der radial äußeren Oberfläche 11 der Umfangsrippe 1 sind über den Umfang des Fahrzeugluftreifens hinweg jeweils mit in Umfangsrichtung U gemessenem Abstand d zueinander ringförmig geschlossene Rillen 12 ausgebildet, welche jeweils einen Rippenabschnitt 17 umschließen.

Die Rille 12 ist dabei jeweils aus einem dem von der Rille 12 umschlossenen Rippenabschnitt 17 in Umfangsrichtung U - in Fig.1 unterhalb Rippenabschnitts 17 dargestellten - vorgeordneten Querabschnitt 14 und einem in Umfangsrichtung U diesem Rippenabschnitt 17 - in Fig.1 oberhalb des Rippenabschnitts 17 dargestellten - nachgeordneten Querabschnitt 13 sowie aus einem diesen Rippenabschnitt 17 in axialer Richtung A zur benachbarten Umfangsrille 6 hin begrenzenden Längsabschnitt 15 und aus einem diesen Rippenabschnitt 17 in axialer Richtung A zu der von der Umfangsrille 6 weg weisenden Seite hin begrenzenden Längsabschnitt 16 ausgebildet. Die Längsabschnitte 15 und 16 sind im wesentlichen in Umfangsrichtung U des Fahrzeugluftreifens ausgerichtet und verbinden die beiden im wesentlichen in axialer Richtung A verlaufenden Querabschnitte 13 und 14 miteinander.

Die Rille 12 ist dabei spiegelsymmetrisch zu einer mittig zwischen den Querabschnitten 13 und 14 verlaufend ausgebildeten Symmetrieebene 20 ausgebildet. Da die Ausbildung des Querabschnitts 14 somit durch Spiegelung an der Symmetrieebene 20 aus dem Querabschnitt 13 gebildet wird, wird im folgenden zum Teil lediglich die Ausbildung des Querabschnitts 13 näher beschrieben. Im dargestellten Ausführungsbeispiel ist die Symmetrieebene 20 in axialer Richtung A des Reifens ausgebildet und enthält die Reifenachse.

Die Rille 12 ist in der radial äußeren Oberfläche mit einer maximalen Erstreckung in Umfangsrichtung L ausgebildet, wobei L mit 25mm ≤ L ≤ 50mm ausgebildet ist.

Die Rillen 12 sind dabei jeweils in axialer Richtung A in einem Abstand a von der die Umfangsrippe 1 zur Umfangsrille 6 hin begrenzenden Flanke gemessen in der radial äußeren Oberfläche 11 der Umfangsrippe 1 ausgebildet, wobei 3mm ≤ a ≤ 12mm ist.

Die Rillen 12 sind im Abstand d zueinander ausgebildet, wobei 20mm ≤ d ≤ 40mm ist.

Bei Reifen mit Pitchfolgen variieren die Abstände d zwischen den Rillen 12 und die maximale Erstreckung L der einzelnen Rillen 12 über den Umfang des Reifens den Pitschfolgen entsprechend.

Die Rille 12 ist in radialer Richtung R nach innen hin durch einen über den gesamten Erstreckungsbereich der Rille 12 erstreckten Rillengrund 10 begrenzt. Die Rille 12 ist längs ihrer Erstreckung zu dem von ihr umschlossenen Rippenabschnitt 17 durch eine innere Rillenwand 19 und zu der vom Rippenabschnitt 17 weg weisenden Seite hin durch eine äußere Rillenwand 18 begrenzt, wobei sich die innere Rillenwand 19 und die äußere Rillenwand 18 in radialer Richtung R des Fahrzeugluftreifens jeweils aus dem Rillengrund 10 bis zur radial äußeren Oberfläche 11 der Umfangsrippe 1 erstrecken.

Die äußere Rillenwand 18 ist jeweils in den beiden Querabschnitten 13 und 14 in ihrem Erstreckungsverlauf längs des jeweiligen Querabschnitts 13 bzw. 14 in der radial äußeren Oberfläche kreissegmentförmig mit einem Krümmungsradius R_{K} zum Rippenabschnitt 17 hin gekrümmt ausgebildet. Der Krümmungsmittelpunkt ist dabei in einer axialen Position innerhalb des axialen Erstreckungsbereichs der Rille 12 ausgebildet. Ebenso ist die innere Rillenwand 19 jeweils in den beiden Querabschnitten 13 und 14 in ihrem Erstreckungsverlauf längs des jeweiligen Querabschnitts 13 bzw. 14 in der radial äußeren Oberfläche kreissegmentförmig mit einem Krümmungsradius R_{K1} zum Rippenabschnitt 17 hin gekrümmt ausgebildet. Der Krümmungsmittelpunkt ist dabei in einer axialen Position innerhalb des axialen Erstreckungsbereichs der Rille 12 ausgebildet. Die Krümmungsradien R_{K} und R_{K1} sind dabei mit R_{K} > R_{K1} ausgebildet.

Die Krümmungsradien R_{K} sowie R_{K1} sowie deren Krümmungsmittelpunkte sind dabei so gewählt, dass die in der radial äußeren Oberfläche 11 jeweils senkrecht zur Erstreckungsrichtung des Querabschnitts 13 bzw. des Querabschnitts 14 der Rille 12 gemessene Breite B₁ innerhalb des mittleren Drittels der Erstreckungslänge des Querabschnitts 13 bzw. 14 zwischen den Längsabschnitten 15 und 16 ihr Minimum aufweist und von diesem Minimalwert längs der Erstreckung des Querabschnitts 13 bzw. 14 in Richtung zum Längsabschnitt 15 und 16 hin stetig zunimmt.

Der Längsabschnitt 16 ist in der radial äußeren Oberfläche 11 der Umfangsrippe 1 längs seiner Erstreckung mit einer konstanten Breite B₃ ausgebildet. Der Längsabschnitt 15 ist in der radial äußeren Oberfläche 11 der Umfangsrippe 11 längs seiner Erstreckung mit einer konstanten Breite B₂ ausgebildet.

Für die Breiten B₁ und B₂ gilt B₁ > B₂.

Die Breite B₂ ist mit 0,5mm≤B₂≤3mm ausgebildet. Die Breite B₃ ist mit 0,5 mm ≤ B₃ ≤ 5 mm ausgebildet. Die Breite B₁ ist mit 3mm≤B₁≤7 mm ausgebildet. Beispielsweise ist die Breite B₂ mit 2 mm ausgebildet, die Breite B₁ ist an ihrer engsten Stelle mit 4 mm ausgebildet und erweitert sich zu beiden Seiten der engsten Stelle bis auf einen maximalen Wert von 6 mm. Beispielsweise ist die Breite B₃ mit 2 mm ausgebildet.

Die Rille 12 ist in ihrem Längsabschnitt 15 mit einer längs der gesamten Erstreckung des Längsabschnitts konstanten Tiefe T₂ ausgebildet. Ebenso ist die Rille 12 in ihrem Längsabschnitt 16 mit einer längs der gesamten Erstreckung des Längsabschnitts 16 konstanten Rillentiefe T₃ ausgebildet. Die Rille 12 ist in ihren Querabschnitten 13 und 14 jeweils mit einer Tiefe T₁ ausgebildet. Die Tiefe T₁ ist dabei in einem unmittelbar an den Längserstreckungsabschnitt 15 angrenzenden ersten Erstreckungsbereich der vom Längserstreckungsabschnitt 15 ausgemessenen Erstreckungslänge c mit einer Tiefe T₁ ausgebildet, welche in diesem Erstreckungsabschnitt noch der Tiefe T₂ des Längsabschnittes 15 entspricht, d.h. in diesem Erstreckungsabschnitt der Länge c ist T₁= T₂. In der Position im Abstand c vom Längsabschnitt 15 ist der Rillengrund 10 aus der Position der Tiefe T₂ deutlich abgesenkt auf einen Wert T₁ₘₐₓ mit T₁ₘₐₓ> T₂ und ab dieser Position nimmt die Tiefe T₁ längs der Erstreckung des Abschnitts 13 bzw. 14 bis zum Längsabschnitt 16 hin kontinuierlich ab bleibt jedoch längs dieser Erstreckung größer als T₂. Der Erstreckungsabschnitt c hat dabei eine Erstreckungslänge von maximal einem Viertel der gesamten zwischen den Längsabständen 15 und 16 gemessenen Erstreckungslänge der Querabschnitte 13 und 14.

Die Tiefe T₂ ist dabei mit 0,5 mm≤T₂≤4,5 mm ausgebildet. Die Tiefe T₃ ist mit 0,5mm≤T₃≤2 mm ausgebildet. Die Tiefe T₁ ist zwischen der Stufe im Abstand c vom Längsabschnitt 15 bis hin zum Längsabschnitt 16 mit 0,5mm ≤ T₁ ≤9 mm ausgebildet, wobei der Maximalwert unmittelbar im Anschluss an die Stufe erreicht ist und der Minimalwert im benachbarten Bereich zum Längsabschnitt 16.

Die Tiefen T₁, T₂ und T₃ werden dabei jeweils in radialer Richtung R zwischen der durch die Oberfläche 11 gebildeten Mantelfläche und dem Rillengrund 10 der Rille 12 bemessen.

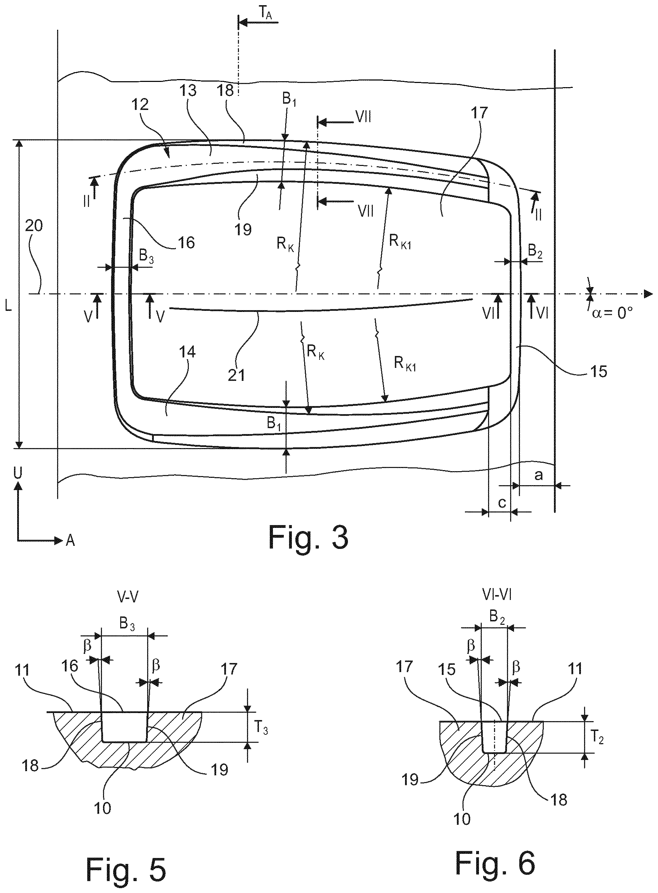

Wie in den Figuren 1 und 3 zu erkennen ist, ist die äußere Rillenwand 18 im Übergang zwischen den Querabschnitten 12 und 14 einerseits und den Längsabschnitten 15 und 16 jeweils über ihre gesamte radiale Erstreckung hinweg und auch in ihrer Schnittkontur in der radial äußeren Oberfläche 11 abgerundet ausgebildet. Ebenso ist die innere Rillenwand 19 im Übergang zwischen den Querabschnitten 13 und 14 einerseits und den Längsabschnitten 15 und 16 andererseits jeweils über ihre gesamte radiale Erstreckung hinweg und auch in ihrer Schnittkontur in der radial äußeren Oberfläche 11 abgerundet ausgebildet.

In Fig. 1 ist ein weiteres Ausführungsbeispiel dargestellt, bei dem die äußere Rillenwand 18 und die innere Rillenwand 19 in den Querabschnitten 13 und 14 jeweils in den Schnittebenen senkrecht zur Symmetrieachse 20 und somit im dargestellten Ausführungsbeispiel senkrecht zur axialen Richtung A mit einem Flankenwinkel β in radialer Richtung R von innen nach außen hin geneigt ausgebildet ist mit 0° ≤ β ≤ 5°, wobei der Flankenwinkel β längs der Erstreckung des Abschnitts 13 bzw. 14 ausgehend vom Längsabschnitt 16 in Richtung Längsabschnitt 15 gesehen bis zur Position im Abstand c vom Längsabschnitt 15 kontinuierlich zunimmt. Beispielsweise verändert sich der Neigungswinkel β dabei von seinem minimalem Wert mit β = 1° bis zu seinem maximalen Wert von β = 4°.

In den Fig. 1 bis 7 sind jeweils Ausführungsbeispiele dargestellt, bei denen die Symmetrieachse 20 in axialer Richtung A des Fahrzeugluftreifens ausgerichtet ist und bei denen somit der Neigungswinkel α der Symmetrieebene 20 zur axialen Richtung A mit α = 0° ausgebildet ist.

In anderer nicht dargestellter Ausführung ist der Neigungswinkel α der Symmetrieebene 20 mit einem Neigungswinkel von 0° ≤ α ≤ 5° ausgebildet. Beispielsweise ist der Neigungswinkel α = 3° ausgebildet.

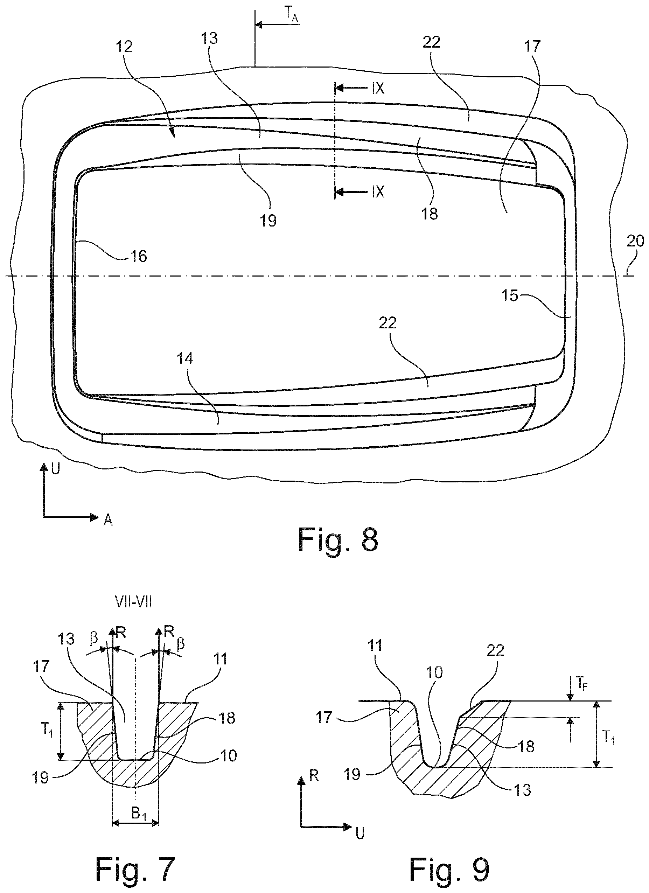

Die Fig. 8 und 9 zeigen ein Ausführungsbeispiel, bei dem die Rille 12 und das umschlossene Rippenelement 17 wie in den oben genannten und in den Fig.1 und Fig. 3 dargestellten Ausführungsbeispielen ausgebildet ist. In diesem Ausführungsbeispiel ist jedoch im Querabschnitt 13 die Rillenwand 18 und im Querabschnitt 14 die Rillenwand 19 im Übergang zwischen Rillenwand 18 bzw. 19 und radial äußerer Oberfläche 11 jeweils als Fase 22 ausgebildet. Im dargestellten Ausführungsbeispiel von Fig. 8 ist die Fase 22 in ihrer ausgehend von der radial äußeren Oberfläche 11 gemessenen Tiefenerstreckung T_{F} mit T_{F} ≤ T₂ und mit T_{F} ≤ 2 mm ausgebildet.

Die Rillenwände 18 und 19 sind im Erstreckungsbereich der Längsabschnitte 15 und 16 in einem Ausführungsbeispiel in der radial äußeren Oberfläche 11 mit geradliniger Schnittkontur ausgebildet.

In anderer nicht dargestellter Ausführung sind auch die Rillenwände 18 und 19 im Erstreckungsbereich der Längsabschnitte 15 und 16 jeweils kreissegmentförmig mit Krümmungsradius zum umschlossenen Rippenabschnitt 17 hin gekrümmt ausgebildet. Die Krümmungsradien der äußeren Rillenwand 18 und der inneren Rillenwand 19 sind dabei jeweils so gewählt, dass sie größer ausgebildet sind als die Krümmungsradien R_{K} und R_{K1} der Rillenwände 18 und 19 in den Längsabschnitten 13 und 14. In den Längsabschnitten 15 und 16 ist in der Schnittebene mit der radial äußeren Oberfläche 11 der Krümmungsradius der äußeren Rillenwand 18 ist dabei gleich groß oder größer gewählt als der Krümmungsradius der inneren Rillenwand 19 gewählt. Die Krümmungsmittelpunkte der Krümmung der äußeren Rillenwand 18 und der inneren Rillenwand 19 des Längsabschnitts 15 bzw. 16 sind dabei in einer Umfangsposition ausgebildet innerhalb der Erstreckungslänge L der Rille 12.

Die Umfangsprofilbänder 2, 3 und 4 sowie das Schulterprofilband 5 sind dabei jeweils entweder als Umfangsrippe oder als Profilblockreihe ausgebildet.

In einem nicht dargestellten Ausführungsbeispiel ist auch die Schulterrippe 5 spiegelbildlich zur Äquatorebene Ä-Ä wie die Umfangsrippe 1 mit über den Umfang des Fahrzeugluftreifens verteilt ausgebildeten jeweils einen Rippenabschnitt umschließenden ringförmig geschlossene Rillen 12 jeweils im Abstand a zur benachbarten Umfangsrille ausgebildet.

In anderer nicht dargestellter Ausführung sind eine oder mehrere der Profilbändern 2, 3 und 4 als Umfangsrippe ausgebildet, in welcher über den Umfang des Fahrzeugluftreifens hinweg im Abstand zueinander derartige ringförmige Rippenabschnitte 17 umschließende ringförmig geschlossene Rillen 12 jeweils im Abstand a zur benachbarten Umfangsrille ausgebildet sind.

In Fig. 1 ist ein weiteres Ausführungsbeispiel dargestellt, bei welchem in dem von der Umfangsrille 12 ringförmig umschlossenen Rippenabschnitt 17 zusätzlich ein im wesentlichen axial erstreckter Feineinschnitt 21 bekannter Art sowohl in Umfangsrichtung U als auch in axialer Richtung A mit Abstand zur Rippe 12 ausgebildet ist.

### Bezugszeichenliste

### (Teil der Beschreibung)

- 1: Schulterrippe
- 2: Umfangsprofilband
- 3: Umfangsprofilband
- 4: Umfangsprofilband
- 5: Schulterrippe
- 6: Umfangsrille
- 7: Umfangsrille
- 8: Umfangsrille
- 9: Umfangsrille
- 10: Rillengrund
- 11: Radial äußere Oberfläche
- 12: Ringförmig geschlossene Rille
- 13: Querabschnitt
- 14: Querabschnitt
- 15: Längsabschnitt
- 16: Längsabschnitt
- 17: Rippenabschnitt
- 18: Äußere Rillenwand
- 19: Innere Rillenwand
- 20: Symmetrieachse
- 21: Feineinschnitt
- 22: Fase

## Patentansprüche

1. Laufstreifenprofil eines Fahrzeugluftreifens mit durch Rillen (6,7,8,9) voneinander getrennten radial erhabenen Profilelementen (1,2,3,4,5), wie zum Beispiel Profilblockelementen oder Profilrippen, mit einer Umfangsrippe (1), welche in radialer Richtung R des Reifens nach außen hin von einer radial äußeren Oberfläche (11) begrenzt ist, wobei in der radial äußeren Oberfläche (11) der Umfangsrippe (1) über den Umfang des Fahrzeugluftreifens verteilt, in Umfangsrichtung U zueinander beabstandet und in axialer Richtung A von der nächstliegenden Rippenflanke der Umfangsrippe (1) beabstandet Rillen (12) ausgebildet sind, welche um einen Rippenabschnitt (17) eine geschlossene Ringform bilden,
**dadurch gekennzeichnet,**
**dass** ein zur nächstliegenden die Umfangsrippe (1) begrenzenden Umfangsrille (6) benachbarte Längserstreckungsabschnitt (15) längs seiner Erstreckung mit einer konstanten Rillentiefe T₂ ausgebildet ist, wobei Quererstreckungsabschnitte (13,14) über wenigstens dreiviertel ihrer Erstreckungslänge mit einer Rillentiefe T₁ mit T₁ > T₂ ausgebildet sind, welche sich längs dieser Erstreckungslänge in Erstreckungsrichtung zu dem zur nächstliegenden die Umfangsrippe (1) begrenzenden Umfangsrille (6) hin benachbarten Längserstreckungsabschnitt (15) in axialer Richtung A des Reifens stetig vergrößert.

2. Laufstreifenprofil gemäß den Merkmalen von Anspruch 1,
wobei die Rille (12) mit zwei in Umfangsrichtung U hintereinander angeordneten im wesentlichen quer zur Rippenerstreckungsrichtung verlaufenden Quererstreckungsabschnitten (13,14), von denen der eine (14) in Umfangsrichtung dem umschlossenen Rippenabschnitt (17) vorgeordnet und der andere dem umschlossenen Rippenabschnitt (17) nachgeordnet angeordnet ist und die den Rippenabschnitt (17) in Umfangsrichtung U begrenzen, und mit zwei in axialer Richtung A voneinander beabstandeten, im wesentlichen in Umfangsrichtung U verlaufenden und die Quererstreckungsabschnitte (13,14) miteinander verbindenden Längserstreckungsabschnitten (15,16), von denen der eine (15) in axialer Richtung A zur einen Seite vom Rippenabschnitt (17) und der andere (16) in axialer Richtung A zur anderen Seite vom Rippenabschnitt (17) angeordnet ist und die den Rippenabschnitt (17) in axialer Richtung A begrenzen.

3. Laufstreifenprofil gemäß den Merkmalen von Anspruch 2,
wobei die Rille (12) von einer inneren, zum umschlossenen Rippenabschnitt (17) hinweisenden Rillenwand (19) und von einer äußeren, vom umschlossenen Rippenabschnitt (17) wegweisenden Rillenwand (18) begrenzt ist, welche sich in radialer Richtung R ausgehend vom Rillengrund (10) bis zur radial äußeren Oberfläche (11) erstrecken,
wobei die äußere Rillenwand (18) in den beiden Quererstreckungsabschnitten (13,14) längs ihrer Erstreckung in axialer Richtung A zum umschlossenen Rippenabschnitt (17) hin gekrümmt ausgebildet sind.

4. Laufstreifenprofil gemäß den Merkmalen von Anspruch 2,
wobei die äußere Rillenwand (18) in den beiden Quererstreckungsabschnitten (13,14) längs ihrer Erstreckung in axialer Richtung A mit einem zum umschlossenen Rippenabschnitt (17) hin kreissegmentförmig gekrümmten Verlauf mit Krümmungsradius R_{K} ausgebildet sind, wobei insbesondere der Krümmungsradius R_{K} größer ausgebildet ist als der maximale in Umfangsrichtung U gemessene Abstand L der äußeren Rillenwand (18) der beiden Quererstreckungsabschnitte (13,14) von einander.

5. Laufstreifenprofil gemäß den Merkmalen von einem oder mehreren der vorangegangenen Ansprüche,
wobei die Rille (12) im Wesentlichen spiegelsymmetrisch ausgebildet ist mit einer zwischen den beiden Quererstreckungsabschnitten (12,13) ausgebildeten Symmetrieachse (20).

6. Laufstreifenprofil gemäß den Merkmalen von Anspruch 5,
wobei die Symmetrieachse (20) unter einem Winkel α mit 0°≤α≤5°zur axialen Richtung A des Fahrzeugluftreifens ausgerichtet ist.

7. Laufstreifenprofil gemäß den Merkmalen von einem oder mehreren der vorangegangenen Ansprüche,
wobei im Rippenabschnitt (17) zwischen den beiden Quererstreckungsabschnitten (13,14) mit Abstand zu den Quererstreckungsabschnitten (13,14) und zu den Längserstreckungsabschnitten (15,16) ein Feineinschnitt (21) ausgebildet ist, welcher mit seiner Haupterstreckungsrichtungskomponente insbesondere in axialer Richtung A ausgerichtet ist.

8. Laufstreifenprofil gemäß den Merkmalen von einem oder mehreren der vorangegangenen Ansprüche,
wobei die Quererstreckungsabschnitte (13,14) jeweils mit einer Rillenbreite B₁ ausgebildet sind, welche ausgehend vom einen Längserstreckungsabschnitt (15) bis zum anderen Längserstreckungsabschnitt (16) in einem ersten Erstreckungsabschnitt zunimmt und in einem anschließenden zweiten Erstreckungsabschnitt, welcher bis zum anderen Längserstreckungsabschnitt (16) reicht, abnimmt.

9. Laufstreifenprofil gemäß den Merkmalen von einem oder mehreren der vorangegangenen Ansprüche,
wobei die Rillenwände (18,19) in den Quererstreckungsabschnitten (13,14) in ihrem radial äußeren Erstreckungsabschnitt im Übergang zu der radial äußeren Oberfläche (11) zumindest teilweise angefast ausgebildet sind.

10. Laufstreifenprofil gemäß den Merkmalen von einem oder mehreren der vorangegangenen Ansprüche,
wobei die Umfangsrippe (1) eine Schulterrippe ist.

11. Laufstreifenprofil gemäß den Merkmalen von Anspruch 10,
wobei die Rille (12) sich mit ihren Quererstreckungsabschnitten (13,14) von einer axialen Position innerhalb der Bodenaufstandsbreite T_{A} bis in eine axiale Position außerhalb der Bodenaufstandsbreite T_{A} erstreckt.

## Claims

1. Tread profile of a pneumatic vehicle tyre, having radially elevated profile elements (1, 2, 3, 4, 5), for example profile block elements or profile ribs, which are separated from one another by channels (6, 7, 8, 9), having a circumferential rib (1) which is delimited outwardly in a radial direction R of the tyre by a radially outer surface (11), wherein, in the radially outer surface (11) of the circumferential rib (1), distributed over the circumference of the pneumatic vehicle tyre, spaced apart from one another in a circumferential direction U and spaced apart in an axial direction A from the closest rib flank of the circumferential rib (1), there are formed channels (12) which form a closed annular form around a rib portion (17),
**characterized**
**in that** a longitudinal extent portion (15) adjacent to the closest circumferential channel (6) delimiting the circumferential rib (1) is formed along its extent with a constant channel depth T₂, wherein transverse extent portions (13, 14) are formed over at least three quarters of their extent length with a channel depth T₁, where T₁ > T₂, which increases continuously along said extent length in the extent direction toward the length extent portion (15), which is adjacent to the closest circumferential channel (6) that delimits the circumferential rib (1), in the axial direction A of the tyre.

2. Tread profile according to the features of Claim 1, wherein the channel (12) is with two transverse extent portions (13, 14) which are arranged one behind the other in the circumferential direction U and which run substantially transversely with respect to the rib extent direction and of which one (14) is arranged in front of the enclosed rib portion (17) in the circumferential direction and the other is arranged behind the enclosed rib portion (17) and which delimit the rib portion (17) in the circumferential direction U, and with two longitudinal extent portions (15, 16) which are spaced apart from one another in the axial direction A and which run substantially in the circumferential direction U and which connect the transverse extent portions (13, 14) to one another and of which one (15) is arranged in the axial direction A to one side of the rib portion (17) and the other (16) is arranged in the axial direction A to the other side of the rib portion (17) and which delimit the rib portion (17) in the axial direction A.

3. Tread profile according to the features of Claim 2, wherein the channel (12) is delimited by an inner channel wall (19), which points towards the enclosed rib portion (17), and by an outer channel wall (18), which points away from the enclosed rib portion (17), which channel walls extend in the radial direction R from the channel base (10) to the radially outer surface (11),
wherein the outer channel wall (18) in the two transverse extent portions (13, 14) are formed along their extent in the axial direction A so as to be curved toward the enclosed rib portion (17).

4. Tread profile according to the features of Claim 2, wherein the outer channel wall (18) in the two transverse extent portions (13, 14) are formed along their extent in the axial direction A with a profile curved in circular-segment-shaped form, with a curvature radius R_{K}, toward the enclosed rib portion (17), wherein, in particular, the curvature radius R_{K} is configured to be greater than the maximum spacing L, measured in the circumferential direction U, of the outer channel wall (18) of the two transverse extent portions (13, 14) from one another.

5. Tread profile according to the features of one or more of the preceding claims,
wherein the channel (12) is of substantially mirror-symmetrical form, with an axis of symmetry (20) formed between the two transverse extent portions (12, 13).

6. Tread profile according to the features of Claim 5, wherein the axis of symmetry (20) is oriented at an angle α, where 0° ≤ α ≤ 5°, with respect to the axial direction A of the pneumatic vehicle tyre.

7. Tread profile according to the features of one or more of the preceding claims,
wherein, in the rib portion (17) between the two transverse extent portions (13, 14), with a spacing to the transverse extent portions (13, 14) and to the longitudinal extent portions (15, 16), there is formed a sipe (21) which is oriented with its main extent direction component in particular in the axial direction A.

8. Tread profile according to the features of one or more of the preceding claims,
wherein the transverse extent portions (13, 14) are formed in each case with a channel width B₁ which, proceeding from one longitudinal extent portion (15) to the other longitudinal extent portion (16), increases in a first extent portion and decreases in an adjoining second extent portion which extends to the other longitudinal extent portion (16).

9. Tread profile according to the features of one or more of the preceding claims,
wherein the channel walls (18, 19) in the transverse extent portions (13, 14) are formed so as to be at least partially bevelled in their radially outer extent portion at the transition to the radially outer surface (11).

10. Tread profile according to the features of one or more of the preceding claims,
wherein the circumferential rib (1) is a shoulder rib.

11. Tread profile according to the features of Claim 10, wherein the channel (12) extends with its transverse extent portions (13, 14) from an axial position within the ground contact patch width T_{A} to an axial position outside the ground contact patch width T_{A}.

## Revendications

1. Sculpture de bande de roulement d'un pneu de véhicule comprenant des éléments de sculpture (1, 2, 3, 4, 5) rehaussés radialement séparés les uns des autres par des rainures (6, 7, 8, 9), par exemple des éléments de bloc de sculpture ou des nervures de sculpture, comprenant une nervure périphérique (1), laquelle est délimitée dans la direction radiale R du pneu vers l'extérieur par une surface (11) radialement extérieure, des rainures (12) étant formées dans la surface (11) radialement extérieure de la nervure périphérique (1), de manière répartie sur la périphérie du pneu de véhicule, de manière espacée les unes des autres dans la direction périphérique U et de manière espacée, dans la direction axiale A, du flanc de la nervure périphérique (1) le plus proche, lesquelles rainures forment une forme annulaire fermée autour d'une partie de nervure (17),
**caractérisée en ce**
**qu'**une partie d'étendue longitudinale (15) adjacente à la rainure périphérique (6) la plus proche délimitant la nervure périphérique (1) est formée de manière à présenter une profondeur de rainure T₂ constante le long de son étendue, des parties d'étendue transversale (13, 14) étant formées de manière à présenter une profondeur de rainure T₁ telle que T₁ > T₂ sur au moins trois quarts de leur longueur d'étendue, laquelle profondeur de rainure augmente de manière continue dans la direction axiale A du pneu le long de cette longueur d'étendue dans la direction d'étendue par rapport à la partie d'étendue longitudinale (15) adjacente en direction de la rainure périphérique (6) la plus proche délimitant la nervure périphérique (1).

2. Sculpture de bande de roulement selon les caractéristiques de la revendication 1,
dans laquelle la rainure (12) avec deux parties d'étendue transversale (13, 14) disposées l'une derrière l'autre dans la direction périphérique U et s'étendant sensiblement transversalement à la direction d'étendue de nervure, parmi lesquelles l'une (14) est disposée en amont de la partie de nervure entourée (17) dans la direction périphérique et l'autre est disposé en aval de la partie de nervure entourée (17), et lesquelles délimitent la partie de nervure (17) dans la direction périphérique U, et avec deux parties d'étendue longitudinale (15, 16) espacées l'une de l'autre dans la direction axiale A, s'étendant sensiblement dans la direction périphérique U et reliant l'une à l'autre les parties d'étendue transversale (13, 14), parmi lesquelles l'une (15) est disposée d'un côté de la partie de nervure (17) dans la direction axiale A et l'autre (16) est disposée de l'autre côté de la partie de nervure (17) dans la direction axiale A, et lesquelles délimitent la partie de nervure (17) dans la direction axiale A.

3. Sculpture de bande de roulement selon les caractéristiques de la revendication 2,
dans laquelle la rainure (12) est délimitée par une paroi de rainure intérieure (19) orientée vers la partie de nervure entourée (17) et par une paroi de rainure extérieure (18) opposée à la partie de nervure entourée (17), lesquelles s'étendent dans la direction radiale R à partir du fond de rainure (10) jusqu'à la surface (11) radialement extérieure,
dans laquelle la paroi de rainure extérieure (18) sont formées de manière courbée vers la partie de nervure entourée (17) dans les deux parties d'étendue transversale (13, 14) le long de leur étendue dans la direction axiale A.

4. Sculpture de bande de roulement selon les caractéristiques de la revendication 2,
dans laquelle la paroi de rainure extérieure (18) sont formées de manière à présenter une allure courbée en forme de segment de cercle de rayon de courbure R_{K} en direction de la partie de nervure entourée (17) dans les deux parties d'étendue transversale (13, 14) le long de leur étendue dans la direction axiale A, dans laquelle le rayon de courbure R_{K} est en particulier supérieur à la distance L maximale, mesurée dans la direction périphérique U, de la paroi de rainure extérieure (18) des deux parties d'étendue transversale (13, 14).

5. Sculpture de bande de roulement selon les caractéristiques d'une ou plusieurs des revendications précédentes,
dans laquelle la rainure (12) présente sensiblement une symétrie miroir présentant un axe de symétrie (20) formé entre les deux parties d'étendue transversale (12, 13) .

6. Sculpture de bande de roulement selon les caractéristiques de la revendication 5,
dans laquelle l'axe de symétrie (20) est orienté suivant un angle α tel que 0° ≤ α ≤ 5° par rapport à la direction axiale A du pneu de véhicule.

7. Sculpture de bande de roulement selon les caractéristiques d'une ou plusieurs des revendications précédentes,
dans laquelle une entaille fine (21) est formée dans la partie de nervure (17) entre les deux parties d'étendue transversale (13, 14) à distance des parties d'étendue transversale (13, 14) et des parties d'étendue longitudinale (15, 16), laquelle entaille fine est orientée de telle sorte que sa composante directionnelle d'étendue principale soit en particulier dans la direction axiale A.

8. Sculpture de bande de roulement selon les caractéristiques d'une ou plusieurs des revendications précédentes,
dans laquelle les parties d'étendue transversale (13, 14) sont formées respectivement de manière à présenter une largeur de rainure B₁, laquelle augmente dans une première partie d'étendue d'une partie d'étendue longitudinale (15) à l'autre partie d'étendue longitudinale (16) et diminue dans une deuxième partie d'étendue adjacente qui s'étend jusqu'à l'autre partie d'étendue longitudinale (16).

9. Sculpture de bande de roulement selon les caractéristiques d'une ou plusieurs des revendications précédentes,
dans laquelle les parois de rainure (18, 19) dans les parties d'étendue transversale (13, 14) sont formées de manière au moins partiellement biseautée dans leur partie d'étendue radialement extérieure dans la transition par rapport à la surface (11) radialement extérieure.

10. Sculpture de bande de roulement selon les caractéristiques d'une ou plusieurs des revendications précédentes,
dans laquelle la nervure périphérique (1) est une nervure d'épaulement.

11. Sculpture de bande de roulement selon les caractéristiques de la revendication 10,
dans laquelle la nervure (12) s'étend, par ses parties d'étendue transversale (13, 14), d'une position axiale à l'intérieur de la largeur d'appui au sol T_{A} à une position axiale à l'extérieur de la largeur d'appui au sol T_{A}.
